# EUROPÄISCHE PATENTSCHRIFT

(11) **EP 0 850 375 B1**
(45) Veröffentlichungstag und Bekanntmachung des Hinweises auf die Patenterteilung: **02.06.1999**
(21) Anmeldenummer: 96930162.1
(22) Anmeldetag: 04.09.1996
(51) Int. Cl.: F16K 11/20, B65H 51/16, D03D 47/34

(54) **PNEUMATISCHE VENTILEINRICHTUNG FÜR EIN FADENLIEFERGERÄT UND FADENLIEFERGERÄT**
PNEUMATIC VALVE DEVICE FOR A THREAD-FEEDING MACHINE AND A THREAD-FEEDING MACHINE
DISPOSITIF PNEUMATIQUE A SOUPAPES DESTINE A UN SYSTEME D'ALIMENTATION EN FIL ET SYSTEME D'ALIMENTATION EN FIL

(30) Priorität: 11.09.1995 DE 19533547
(43) Veröffentlichungstag der Anmeldung: 01.07.1998
(73) Patentinhaber: IRO AB, 523 01 Ulricehamn (SE)
(72) Erfinder: MAROINO, Adriano, I-13014 Cossato (IT)
(74) Vertreter: Grünecker, Kinkeldey, Stockmair & Schwanhäusser Anwaltssozietät
(86) Internationale Anmeldenummer: EP9603882
(87) Internationale Veröffentlichungsnummer: WO9710458

(56) Entgegenhaltungen:
- EP-A- 0 418 948
- EP-A- 0 567 045
- WO-A-92/22693
- DE-C- 4 412 863
- US-A- 5 094 275
- US-A- 5 181 544

## Beschreibung

Die Erfindung betrifft eine pneumatische Ventileinrichtung gemäß dem Oberbegriff des Patentanspruchs 1 sowie ein Fadenliefergerät gemäß dem Oberbegriff des Patentanspruchs 13.

Bei einem aus WO 92/22693 (US 5 094 275) bekannten Fadenliefergerät dient zur wahlweisen Beaufschlagung entweder nur einer zulaufseitigen Fadeneinfädeldüse oder zur Beaufschlagung mehrerer Fadeneinfädeldüsen mit Druckluft eine pneumatische Ventileinrichtung, die entweder besteht aus einem Hauptschaltventil mit nachgeordneten Inhibitionsventilen, oder einem Mehrstellungs-Mehrwegeventil oder einem Drehschieberventil.

Bei einem aus dem Prospekt "Galaxy" Referenznummer 48-1025-201/9239 aus dem Jahre 1992 der Fa. IRO AB, SE, S. 15, bekannten Fadenliefergerät ist eine pneumatische Ventileinrichtung in das Motorgehause eingebaut, die mittels zweier als außen zugängliche Druckknöpfe ausgebildeter Ventilöffner wahlweise so betätigbar ist, daß entweder nur die zulaufseitige Einfädeldüse (durch Drücken des an der Motorgehäuse-Rückseite angeordneten Druckknopfes) oder alle Einfädeldüsen (durch Drücken des an der Seite des Motorgehäuses angeordneten Druckknopfes) druckbeaufschlagt werden. Bei diesen seit 1992 auf dem Markt befindlichen Fadenliefergeräten weist die Ventileinrichtung einen Metallblock auf, in dem zwei mittels der Ventilöffner wahlweise betätigbare Ventile in einer an die Druckquelle angeschlossene Kammer enthalten sind, von der Strömungskanäle zu der zulaufsseitigen Fadeneinfädeldüse und zu den weiteren Fadeneinfädeldüsen angeordnet sind. Zusätzlich ist zwischen den Strömungskanälen im Gehäuse eine Querverbindung vorgesehen, in der ein Rückschlagventil enthalten ist, das in Strömungsrichtung zur zulaufseitigen Einfädeldüse selbsttätig öffnet, und in der entgegengesetzten Strömungsrichtung selbsttätig sperrt. Die Ventileinrichtung mit den Ventilöffnern ist vielteilig und herstellungs- und montagetechnisch aufwendig.

Bei einem aus US-A 5 181 544 bekannten Fadenliefergerät ist in einem an das Motorgehäuse angeschlossenen Block ein Druckluftverteiler zu mehreren Einfädeldüsen und einer pneumatischen Kolben-Zylinder-Einheit vorgesehen, der stromauf ein mittels eines Ventilöffners betätigbares Ventil vorgesetzt ist. Jedoch lassen sich nur sämtliche Verbraucher gleichzeitig druckbeaufschlagen.

Aus EP-A-0 418 948 ist schließlich eine Ventileinrichtung mit einem blockförmigen Gehäuse und zwei Ventilen bekannt, wobei zwei Druckknöpfe vorgesehen sind, um wahlweise einen von zwei Auslässen oder beide Auslässe mit der Druckquelle zu verbinden. Um beide Auslässe mit der Druckquelle zu verbinden, müssen beide Druckknöpfe gedrückt werden.

Der Erfindung liegt die Aufgabe zugrunde, eine Ventileinrichtung der eingangs genannten Art sowie ein Fadenliefergerät mit einer solchen Ventileinrichtung zu schaffen, bei denen die Wahlmöglichkeit zwischen einer Einzelbeaufschlagung und einer Mehrfachbeaufschlagung von Verbrauchern auf herstellungstechnisch einfache und bedienungsfreundliche Weise realisiert ist.

Die gestellte Aufgabe wird erfindungsgemäß mit den Merkmalen des Patentanspruchs 1 bzw. mit den Merkmalen des Patentanspruchs 13 gelöst.

Die Ventileinrichtung ist baulich einfach, da sie nur die beiden Ventile und die getrennten Strömungskanäle enthält, so daß eine Querverbindung mit einem zusätzlichen Rückschlagventil entfällt. Die Ventileinrichtung ist besonders bedienungsfreundlich, da nur der erste oder der zweite Ventilöffner betätigt werden muß, um entweder die Druckbeaufschlagung des wenigstens einen Verbrauchers zu steuern oder die Druckbeaufschlagung aller Verbraucher einzusteuern. Die Schleppkupplung ist herstellungstechnisch einfach und funktionssicher.

Bei dem Fadenliefergerät ist bei einfachem baulichen Aufwand ein hoher Bedienungskomfort gegeben, weil nur der eine oder der andere Ventilöffner zu betätigen ist, um den jeweiligen Funktionsmodus einzusteuern.

Bei der Ausführungsform von Anspruch 2 wird der erste Ventilöffner bei Betätigung des zweiten Ventilöffners mitgenommen, um auch das dem ersten Ventilöffner zugeordneten Ventil zu betätigen.

Bei der Ausführungsform gemäß Anspruch 3 wird über die Schleppkupplung die nicht direkt über den Ventilöffner betätigte Betätigungsverbindung mitgenommen, um auch das andere Ventil zu öffnen.

Bei der Ausführungsform gemäß Anspruch 4 wirkt auf baulich einfache Weise der zweite Ventilöffner über die Schleppkupplung auf die Betätigungsverbindung des anderen Ventilsitzes ein.

Eine baulich besonders einfache Ausführungsform geht aus Anspruch 5 hervor.

Herstellungstechnisch einfach und funktionssicher ist die Ausführungsform gemäß Anspruch 6.

Bei der Ausführungsform gemäß Anspruch 7 lassen sich große Angriffsflächen für den Finger schaffen. Ferner lassen sich diese Ventilöffner baulich einfach und deutlich fühl- bzw. sichtbar anordnen.

Eine besonders zweckmäßige Ausführungsform geht aus Anspruch 8 hervor. Die beiden Gehäuseteile sind formentechnisch einfach beherrschbar, selbst wenn alle baulichen Gegebenheiten für die gewünschten Funktionen integriert werden. Das Gehäuse ist kompakt, insbesondere wenn es gemäß Anspruch 9 aus Kunststoff-Spritzformteilen besteht, die sich durch hohe Formgenauigkeit und geringes Gewicht bei ausreichender Formstabilität auszeichnen.

Herstellungstechnisch einfach ist die Ausführungsform gemäß Anspruch 10.

Es kann jedoch besonders zweckmäßig sein, gemäß Anspruch 11 die Ventilöffner einstückig mit dem Gehäuseteil zu formen, um möglichst wenig zu montierende Teile zu haben.

Besonders wichtig ist das Merkmal von Anspruch 12. Dadurch ist ohne genaues Hinsehen mit der Fingerspitze fühlbar, welcher Ventilöffner betätigt wird. Die beiden Ventilöffner können zudem auch unterschiedlich eingefärbt werden, um schon optisch eine Unterscheidung zu ermöglichen. Gegebenenfalls sind sie sogar im Hinblick auf die mit ihnen zu bewirkende Funktion beschriftet.

Bei der Ausführungsform des Fadenliefergeräts gemäß Anspruch 14 läßt sich der Bremskörper durch Betätigen des zweiten Ventilöffners in die Spaltstellung bringen, wenn auch die Einfädeldüsen druckbeaufschlagt sind, und zwar zweckmäßigerweise voreilend zu diesen.

Bei der Ausführungsform gemäß Anspruch 15 ist die Montage erleichtert. Die Ventileinrichtung läßt sich günstig in das Motorgehäuse integrieren, spart einen Teil des Motorgehäuses und füllt den Ausschnitt zweckmäßigerweise vollständig aus.

Bei der Ausführungsform gemäß Anspruch 16 gestaltet sich die Anschlußverbindung der Ventileinrichtung besonders einfach.

Schließlich ist bei der Ausführungsform gemäß Anspruch 17 die Montage der Ventileinrichtung einfach. Sie hat einen stabilen Sitz im Motorgehäuse. Die Rastzungen bedeuten nur einen vernachlässigbaren Aufwand bei der Herstellung des Gehäuseteils und vereinfachen die Montage und Demontage.

Anhand der Zeichnung werden Ausführungsbeispiele des Erfindungsgegenstandes erläutert. Es zeigen:
- Fig. 1: einen schematischen Längsschnitt eines Fadenliefergerätes mit einer pneumatischen Ventileinrichtung,
- Fig. 2: eine Ventileinrichtung, in einem Schnitt, wie sie bei dem Fadenliefergerät gemäß Fig. 1 verwendbar ist,
- Fig. 3: eine Frontansicht der Ventileinrichtung von Fig. 2, und
- Fig.4a-e: schematische Detailvarianten zur Ventileinrichtung.

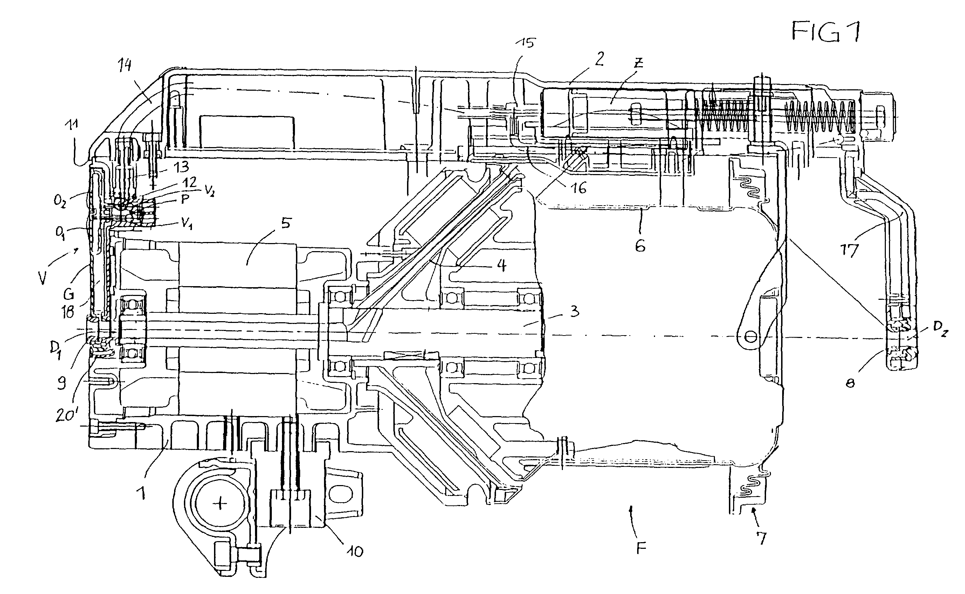

Ein Fadenliefergerät F gemäß Fig. 1 weist ein Motorgehäuse 1 auf, an dem ein längsverlaufender Ausleger 2 befestigt und in dem eine ein Wickelelement 4 tragende Hohlwelle 3 mittels eines Elektromotors 5 drehantreibbar gelagert ist. Auf der Hohlwelle 3 ist eine Speichertrommel 6 drehbar gelagert, die auf übliche Weise gegen Mitdrehen mit der Hohlwelle 3 gehindert wird. Am Ausleger 2 ist ein ringförmiger Fadenbremskörper 7 längsverschiebbar und verstellbar gelagert, der mit der Speichertrommel 6 in üblicher Weise zusammenarbeitet. Am Ende des Auslegers 2 ist eine Abzugsöse 8 für den überkopf von der Speichertrommel 6 abziehbaren Faden angeordnet. Ferner sind vor dem zulaufseitigen Ende der Hohlwelle 3 eine Einlauföse 9 mit einer zugeordneten ersten Einfädeldüse D1 und bei der Abzugsöse 8 eine zweite Einfädeldüse D2 vorgesehen. Zum Verstellen des Fadenbremskörpers 7 in eine nicht gezeigte Spaltstellung, in der zwischen der Speichertrommel 6 und der Fadenbremse 7 ein Durchgangsspalt geöffnet ist, dient eine pneumatische Kolben-Zylinder-Einheit Z, die im Ausleger 2 untergebracht ist. Das Fadenliefergerät F wird mit einer Halterung 10 auf einem Träger festgelegt.

In einem Ausschnitt 11 in der Rückseite des Motorgehäuses 1 ist eine pneumatische Ventileinrichtung V untergebracht, die ein , vorzugsweise aus Kunststoff-Formteilen ausgebildetes, Gehäuse G aufweist, und ggfs. die Aussparung 11 vollflächig und bündig ausfüllt. In der Ventileinrichtung V sind zwei, z.B., als Kugelrückschlagventile ausgebildete Ventile V1 und V2 zwischen einem Druckanschluß P und ersten und zweiten Strömungskanälen 12 und 25 vorgesehen, wobei der Strömungskanal 12 über einen Anschluß 13 und eine Druckleitung 14 an einen Verteiler 15 angeschlossen ist, von dem eine Passage in die Kolben-Zylinder-Einheit Z und weitere Druckleitungen 16, 17 zur zweiten Einfädeldüse D2 führen. Der Strömungskanal 25 führt hingegen über den Strömungsweg 18 zur ersten Einfädeldüse D1. Die Ventileinrichtung V weist an ihrem Gehäuse erste und zweite Ventilöffner O1, O2 auf, mit denen sich die Ventile V1, V2 betätigen lassen. Ferner sind im Ausschnitt 11 Rastnasen 20' eingeformt, an denen das Gehäuse G der Ventileinrichtung V abgestützt ist.

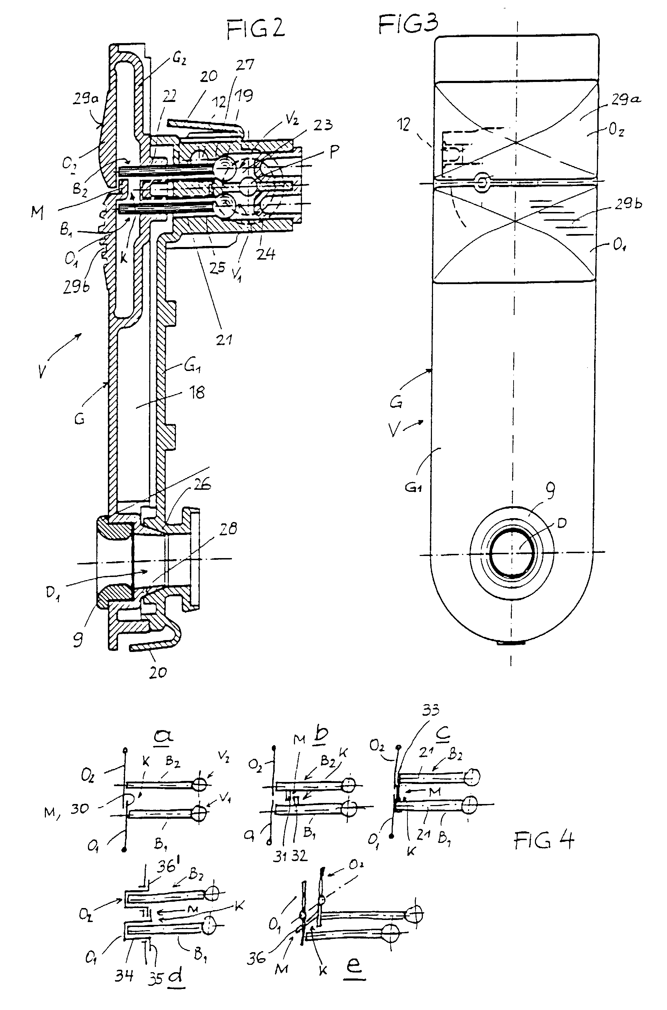

Aus den Fig. 2 und 3 ist der Detailaufbau der Ventileinrichtung V entnehmbar. Das Gehäuse G besteht aus zwei Gehäuseteilen G1, G2, zweckmäßigerweise Kunststoff-Spritzformteilen, die auf nicht näher hervorgehobene Weise fest miteinander verbunden sind. Im einen Gehäuseteil G1 ist eine an den Versorgungsanschluß P angeschlossene Kammer 23 vorgesehen, in der die als Kugeln 19 ausgebildeten Schließelemente der beiden Ventile V1, V2 mit Ventilsitzen 27 zusammenarbeiten. Gegebenenfalls werden die Kugeln 19 durch nicht gezeigte Schließfedern in Schließrichtung beaufschlagt. Das Ventil V1 überwacht eine Verbindung der Kammer 23 mit dem ersten Strömungskanal 25, der sich in den Strömungsweg 18 zur ersten Einfädeldüse D1 fortsetzt. Zwischen dem dem ersten Ventil V1 zugeordneten Ventilöffner O1 (in diesem Fall eine Kipptaste) und dem Ventil V1 ist eine Betätigungsverbindung B1 vorgesehen, die beispielsweise aus einem in einer Führung 22 verschiebbaren Ventilstößel 21 besteht, mit dem sich die Kugel 19 vom Ventilsitz abheben läßt. Zwischen dem zweiten Ventilöffner O2 und dem zweiten Ventil V2 ist ebenfalls eine Betätigungsverbindung B2 in Form eines Ventilstößels 21 vorgesehen. Dieser durchsetzt den Strömungskanal 12, der zum seitlich aus dem Gehäuseteil G1 herausgeführten Anschluß 13 führt. Die Kammer 23 ist durch Stopfen 24 nach außen hermetisch abgeschlossen. Der Gehäuseteil G1 besitzt ferner einen Querteil, der in seinem freien Ende als Düsenelement 26 ausgebildet ist. Ferner sind am Gehäuseteil G1 Rastzungen 20 angeformt, die zur Zusammenarbeit mit den Rastnasen 20' (Fig. 1) bestimmt sind und zum Haltern und Lagesichern der Ventileinrichtung V in einem Fadenliefergerät F der Fig. 1 benutzt werden können.

Der andere Gehäuseteil G2 weist die Führungen 22 für die Ventilstößel 21 auf, sowie einen Querteil, der zusammen mit dem Querteil des Gehäuseteils G1 den Strömungskanal 18 zur ersten Einfädeldüse D1 begrenzt. Am Ende des Querteils des Gehäuses G2 ist ein weiteres Düsenelement 28 angeformt, das zusammen mit dem Düsenelement 26 eine Ejektordüse als erste Einfädeldüse D1 bildet. In den Querteil ist auch die Fadenöse 9 eingesetzt. Ferner sind in den Gehäuseteil G2 der erste und der zweite Ventilöffner O1, O2 einstückig eingeformt, und zwar in Form von Kipptasten, die deutlich voneinander verschiedene Oberflächenstrukturierungen 29a bzw. 29b besitzen. So ist beispielsweise die Oberflächenstrukturierung 29a glatt und konvex oder konkav gekrümmt, während die Oberflächenstruktur 29b konvex oder konkav gekrümmt und mit Rippen, Noppen oder ähnlichen fühlbaren Erhöhungen versehen ist. Ferner ist eine Schleppkupplung K vorgesehen, die in Betätigungsrichtung des zweiten Ventilöffners O2 wirkt und Betätigung des Ventils V2 bewirkt, daß auch das ersten Ventil V1 gleichzeitig betätigt wird. Die Schleppkupplung K ist in Fig. 2 als Mitnehmer M ausgebildet, der am ersten Ventilöffner O1 angeformt ist und unter den zweiten Ventilöffner O2 greift. Es wäre aber auch denkbar, den Mitnehmer M am zweiten Ventilöffner O2 außen vorzusehen, so daß er von außen über den ersten Ventilöffner O1 greift.

### Daraus ergibt sich folgende Funktion:

Wird nur der erste Ventilöffner O1 gedrückt, dann wird das Ventil V1 geöffnet und eine Verbindung vom Druckanschluß P zur ersten Einfädeldüse D1 hergestellt. Das zweite Ventil V2 bleibt geschlossen. Wird hingegen der zweite Ventilöffner V2 betätigt, dann werden beiden Ventile V1 und V2 geöffnet. Die Druckluft strömt sowohl zur ersten Einfädeldüse D1 als auch zu der mindestens einen weiteren zweiten Einfädeldüse D2 und, falls vorhanden, auch in die Kolben-Zylinder-Einheit Z. Nach Loslassen des ersten oder des zweiten Ventilöffners O1, O2 werden die Ventile V1, V2unter dem Druck in der Kammer 23 selbsttätig geschlossen.

In Fig. 4a ist als Ausführungsvariante angedeutet, daß der zweite Ventilöffner O2 den ersten Ventilöffner O1 außen überlappt, so daß der Rand 30 des ersten Ventilöffners O1 als Mitnehmer M fungiert.

Bei der Ausführungsvariante gemäß Fig. 4b ist die Schleppkupplung K zwischen den beiden Betätigungsverbindungen B1, B2 vorgesehen, und zwar in Form von Anschlägen 31, 32, die als Mitnehmer M funktionieren, falls der zweite Ventilöffner O2 betätigt wird.

Bei der Ausführungsform gemäß Fig. 4c ist auf dem Ventilstößel 21 der ersten Betätigungsverbindung B1 eine Kappe 33 angeordnet, die bis unter den zweiten Ventilöffner O2 greift und den Mitnehmer M der Schleppkupplung K bildet.

Bei der Ausführungsform der Fig. 4d sind die ersten und zweiten Ventilöffner O1, O2 linear verschiebbare Druckknöpfe 34, deren Ränder 36' und 35 einander so überlappen, daß der Rand 35 des Druckknopfes 34 den Mitnehmer M der Schleppkupplung K bildet.

Bei der Ausführungsform gemäß Fig. 4e sind die ersten und zweiten Ventilöffner O1, O2 Kippschalter oder Kipphebel, die um eine Achse schwenkbar sind. Der zweite Ventilöffner O2 trägt einen Querarm 36, der bei Betätigung des zweiten Ventilöffners O2 den ersten Ventilöffner O1 mitnimmt. Der Querarm 36 könnte auch am ersten Ventilöffner O1 angebracht sein und den zweiten Ventilöffner O2 auf der der Betätigungsverbindung zugewandten Seite hintergreifen.

## Patentansprüche

1. Pneumatische Ventileinrichtung (V), insbesondere für ein Fadenliefergerät (F), mit einem eine an eine Druckquelle anschließbare Kammer (23) enthaltenden Gehäuse (G), mit wenigstens zwei Ventilen (V1, V2) zwischen der Kammer (23) und Strömungskanälen (25,12) zu mehreren Verbrauchern (D1, D2, Z), mit ersten und zweiten, jeweils manuell betätigbaren Ventilöffnern (O1, O2) und mit Betätigungsverbindungen (B1, B2) zwischen jedem Ventilöffner und dem wenigstens einen diesem zugeordneten Ventil, wobei mit dem ersten Ventilöffner (O1) eine Verbindung von der Kammer mit wenigstens einem Verbraucher (D1) herstellbar ist, hingegen mit dem zweiten Ventilöffner (O2) Verbindungen von der Kammer mit allen Verbrauchern (D1, D2, Z) herstellbar sind, **dadurch gekennzeichnet,** daß von der Kammer (23) voneinander getrennte Strömungskanäle (12, 25) zu dem wenigstens einen Verbraucher (D1) und zu den restlichen Verbrauchern (D2, Z) vorgesehen sind, daß zwischen dem zweiten Ventilöffner (O2) und dem mittels des ersten Ventilöffners (O1) allein betätigbaren Ventil (V1) eine einseitig wirkende Schleppkupplung (K) vorgesehen ist, mit der die Betätigungsbewegung des zweiten Ventilöffners (O2) auch auf das an sich mittels des ersten Ventilöffners (O1) betätigbare Ventil (V1) übertragbar ist.

2. Ventileinrichtung nach Anspruch 1, **dadurch gekennzeichnet,** daß die Schleppkupplung (K) zwischen den beiden Ventilöffnern (O1, O2) vorgesehen ist.

3. Ventileinrichtung nach Anspruch 1, **dadurch gekennzeichnet,** daß die Schleppkupplung (K) zwischen den beiden Betätigungsverbindungen (B2, B1) vorgesehen ist.

4. Ventileinrichtung nach Anspruch 1, **dadurch gekennzeichnet,** daß die Schleppkupplung zwischen der Betätigungsverbindung (B1) des ersten Ventilöffners (O1) und dem zweiten Ventilöffner (O2) vorgesehen ist.

5. Ventileinrichtung nach Anspruch 2, **dadurch gekennzeichnet,** daß sich die beiden Ventilöffner (O1, O2) quer zu ihren Betätigungsrichtungen formschlüssig derart überlappen, daß entweder der erste Ventilöffner (O1) unter den zweiten Ventilöffner (O2) greift, oder der zweite Ventilöffner (O2) über den ersten Ventilöffner (O1) greift.

6. Ventileinrichtung nach Anspruch 2, **dadurch gekennzeichnet,** daß einer der beiden Ventilöffner (O1, O2) einen Mitnehmer (M) aufweist, und daß der Mitnehmer (M) entweder am ersten Ventilöffner (O1) angeordnet ist und unter den zweiten Ventilöffner (O2) greift, oder der Mitnehmer am zweiten Ventilöffner (O2) angeordnet ist und über den ersten Ventilöffner (O1) greift.

7. Ventileinrichtung nach wenigstens einem der Ansprüche 1 bis 6, **dadurch gekennzeichnet**, daß die ersten und zweiten Ventilöffner (O1, O2) nebeneinanderliegende Kipptasten oder Drucktasten mit in etwa parallelen Betätigungsrichtungen sind.

8. Ventileinrichtung nach wenigstens einem der Ansprüche 1 bis 7, **dadurch gekennzeichnet**, daß das Gehäuse (G) zweiteilig (G1, G2) ausgebildet ist, daß der eine Gehäuseteil (G1) die Kammer (23), einen Versorgungsanschluß (P) zur Kammer, den von der Kammer (23) zu einem gehäuseteilfesten Anschluß (13) führenden ersten Strömungskanal (12) zu den restlichen Verbrauchern (D2, Z), den von der Kammer (23) zu einer Seitenfläche des Gehäuseteils (G1) führenden zweiten Strömungskanal (25) zu dem wenigstens einen Verbraucher (D1) und einen Querteil mit einem eingeformten ersten Düsenelement (26) aufweist, und daß der zweite Gehäuseteil (G2) Führungen (22) für die Betätigungsverbindungen (B1, B2) bildende Ventilstößel (21), die ersten und zweiten Ventilöffner (O1, O2), und einen mit dem Querteil des einen Gehäuseteils (G1) eine Verlängerung (18) des zweiten Strömungskanals (25) begrenzenden Querteil aufweist, in den ein zweites Düsenelement (28) eingeformt ist, das zusammen mit dem ersten Düsenelement (26) eine aus dem zweiten Strömungskanal beaufschlagbare Ejektordüse bildet.

9. Ventileinrichtung nach Anspruch 8, **dadurch gekennzeichnet**, daß die Gehäuseteile (G1, G2) Kunststoff-Spritzformteile sind.

10. Ventileinrichtung nach wenigstens einem der Ansprüche 8 und 9, **dadurch gekennzeichnet**, daß die beiden Ventilöffner (O1, O2) mit dem Mitnehmer (M) an dem anderen Gehäuseteil (G2) befestigt sind.

11. Ventileinrichtung nach wenigstens einem der Ansprüche 8 und 9, **dadurch gekennzeichnet**, daß die beiden Ventilöffner (O1, O2) mit dem an einem Ventilöffner (O1, O2) angeordneten Mitnehmer (M) einstückig mit dem anderen Gehäuseteil (G2) geformt sind und in etwa mit dessen Querteil fluchten.

12. Ventileinrichtung nach wenigstens einem der Ansprüche 1 bis 11, **dadurch gekennzeichnet**, daß die beiden Ventilöffner (O1, O2) tastbar voneinander deutlich verschiedene Oberflächenstrukturierungen (29a, 29b) aufweisen.

13. Fadenliefergerät (F), mit einem Motorgehäuse (1), in dem eine drehantreibbare, ein Wickelelement tragende Hohlwelle (3) gelagert ist, mit einem drehbar auf der Hohlwelle gelagerten, gegen Mitdrehen gesicherten Speicherkörper (6), mit einem am Motorgehäuse (1) befestigten, sich längs des Speicherkörpers (6) erstreckenden Ausleger (2), mit wenigstens zwei Faden-Einfädeldüsen (D1, D2), von denen wenigstens eine erste vor dem fadenzulaufseitigen Ende der Hohlwelle (3) und wenigstens eine zweite am Ausleger (2) angeordnet ist, und mit einer aus einer Druckquelle beaufschlagbaren, pneumatischen Ventileinrichtung (V) zum wahlweisen Beaufschlagen der wenigstens einen ersten Einfädeldüse (D1) oder aller Einfädeldüsen (D1, D2), wobei die pneumatische Ventileinrichtung (V) ein Gehäuse (G) und erste und zweite, zum Öffnen von Ventilen (V1, V2) über Betätigungsverbindungen (B1, B2) manuell betätigbare Ventilöffner (O1, O2) aufweist, **dadurch gekennzeichnet**, daß im Gehäuse (G) der Ventileinrichtung (V) voneinander getrennte Strömungskanäle (12, 25) zu der wenigstens einen ersten Einfädeldüse (D1) und zu der wenigstens einen zweiten Einfädeldüse (D2) vorgesehen sind, und daß zwischen dem zweiten Ventilöffner (O2) und dem mittels des ersten Ventilöffners (O1) betätigbaren Ventil (V1) eine einseitig wirkende Schleppkupplung (K) vorgesehen ist, mit der die Betätigungsbewegung des zweiten Ventilöffners (O2) auch auf das an sich mittels des ersten Ventilöffners (O1) betätigbare Ventil (V1) übertragbar ist.

14. Fadenliefergerät nach Anspruch 13, **dadurch gekennzeichnet**, daß am Ausleger (2) ein mit dem Speicherkörper (6) kooperierender, ringförmiger Bremskörper (7) mittels einer im Ausleger (2) angeordneten, pneumatischen Kolben-Zylinder-Einheit (Z) relativ zum Speicherkörper (6) zwischen einer Bremsstellung und einer Spaltstellung verstellbar ist, und daß die Kolben-Zylinder-Einheit (Z) parallel zu der wenigstens einen zweiten Einfädeldüse (D2) und bei Druckbeaufschlagung aller Einfädelventile (D1, D2) mittels des zweiten Ventilöffners (O2) über die Ventileinrichtung (V) druckbeaufschlagbar ist.

15. Fadenliefergerät nach Anspruch 13, **dadurch gekennzeichnet**, daß die Ventileinrichtung (V) ein Kunststoffgehäuse (G) aufweist, das mit freiliegenden ersten und zweiten Ventilöffnern (O1, O2) in etwa bündig mit der Rückseite des Motorgehäuses (1) in einen Ausschnitt (11) des Motorgehäuses (1) eingesetzt ist.

16. Fadenliefergerät nach Anspruch 15, **dadurch gekennzeichnet**, daß im Motorgehäuse (1) außen ein Druckluftanschluß angeordnet ist, der durch einen elastischen Verbindungschlauch mit einem Versorgungsanschluß (P) des Gehäuses (G) der Ventileinrichtung (V) verbunden ist.

17. Fadenliefergerät nach wenistens einem der Ansprüche 13 bis 16, **dadurch gekennzeichnet**, daß am Kunststoffgehäuse (G) der Ventileinrichtung (V) Rastzungen (20) einstückig angeformt sind, die Rastnasen (20') im Ausschnitt (11) des Motorgehäuses (1) hintergreifen und die Ventileinrichtung (V) herausnehmbar haltern.

## Claims

1. Pneumatic valve means (V), in particular for a yam feeding device (F), comprising a housing (G) which contains a chamber (23) that is connectable to a source of pressure (P), at least two valves (V1, V2) arranged between said chamber (23) and flow channels (25, 12) leading to a plurality of consumers (D1, D2, Z), first and second valve openers (O1, O2) which are each manually actuable, and actuating connections (B1, B2) between each valve opener and the at least one valve assigned thereto, with the first valve opener (O1) establishing a connection from the chamber with at least one consumer (D1), whereas the second valve opener (O2) can establish a connection from said chamber with all of said consumers (D1, D2, Z), **characterized in** that flow channels (12, 25) which are separated from each other lead from said chamber (23) to the at least one consumer (D1) and to the remaining consumers (D2, Z), that a unilaterally operating drag coupling (K) is provided between said second valve opener (O2) and said valve (V1) which is solely actuable by means of said first valve opener (O1), the actuating movement of said second valve opener (O2) being transmittable by means of said drag coupling (K) also to said valve (V1) which is normally actuable by means of said first valve opener (O1).

2. The valve means according to claim 1, **characterized in** that said drag coupling (K) is provided between said two valve openers (O1, O2).

3. The valve means according to claim 1, **characterized in** that said drag coupling (K) is provided between said two actuating connections (B2, B1).

4. The valve means according to claim 1, **characterized in** that said drag coupling is provided between said actuating connection (B1) of said first valve opener (O1) and said second valve opener (O2).

5. The valve means according to claim 2, **characterized in** that said two valve openers (O1, O2) positively overlap in a direction transverse to their actuating directions in such a manner that either said first valve opener (O1) grips below said second valve opener (O2) or said second valve opener (O2) grips over said first valve opener (O1).

6. The valve means according to claim 2, **characterized** in that one of said two valve openers (O1, O2) comprises a catch (M) and that said catch (M) is arranged either on said first valve opener (O1) and grips below said second vavle opener (O2), or said catch is arranged on said second valve opener (O2) and grips over said first valve opener (O1).

7. The valve means according to at least one of claims 1 to 6, **characterized in** that said first and second valve openers (O1, O2) are adjacent flip switches or push bottons with approximately parallel actuating directions.

8. The valve means according to at least one of claims 1 ot 7, **characterized in** that said housing (G) is bipartite (G1, G2), that the one housing part (G1) comprises said chamber (23), a supply connection (P) leading to said chamber, the first flow channel (12) leading from said chamber (23) to a connection (13) fixed onto the housing part, and to the remaining consumers (D2, Z), the second flow channel (25) leading from said chamber (23) to a side surface of said housing part (G1) and to the at least one consumer (D1), and a transverse member having a first nozzle element (26) molded thereinto, and that said second housing part (G2) comprises guides (22) for valve plungers (21) forming the actuating connections (B1, B2), said first and second valve openers (O1, O2), and a transverse member defining an extension (18) of said second flow channel (25) with the transverse member of said one housing part (G1), said transverse member having molded thereinto a second nozzle element (28) which together with said first nozzle element (26) forms an ejector nozzle which is actuable from said second flow channel.

9. The valve means according to claim 8, **characterized in** that said housing parts (G1, G2) are injection-molded parts of plastics.

10. The valve means according to at least one of claims 8 and 9, **characterized in** that said two valve openers (O1, O2) are secured with said catch (M) to said other housing part (G2).

11. The valve means according to at least one of claims 8 and 9, **characterized in** that said two valve openers (O1, O2) with said catch (M) being arranged on one valve opener (O1, O2) are integrally formed with said other housing part (G2) and are approximately in alignment with the transverse member thereof.

12. The valve means according to at least one of claims 1 to 11, **characterized in** that said two valve openers (O1, O2) have surface structures (29a, 29b) which clearly differ from one another when being touched.

13. A yam feeding device (F), comprising a motor housing (1) having supported therein a rotatingly drivable hollow shaft (3) which carries a winding element, a storage body (6) which is rotatably supported on said hollow shaft and secured against rotation therewith, an extension arm (2) which is secured to said motor housing and extends along said storage body (6), at least two yarn threading nozzles (D1, D2) of which at least a first one is arranged in front of the yarn feed end of said hollow shaft (3) and at least a second one is arranged on said extension arm (2), and a pneumatic valve means (V) which is actuable by a source of pressure and is used for selectively actuating the at least one first threading nozzle (D1) or all threading nozzles (D1, D2), said pneumatic valve means (V) comprising a housing (G) and first and second valve openers (O1, O2) that are manually actuable for opening valves (V1, V2) via actuating connections (B1, B2), **characterized in** that flow channels (12, 25) which are separated from each other and lead to said at least one first threading nozzle (D1) and to said at least one second threading nozzle (D2) are provided in said housing (G) of said valve means (V), and that said second valve opener (O2) and said valve (V1) which is actuable by means of said first valve opener (O1) have arranged thereinbetween a unilaterally operative drag coupling (K) for transmitting the actuating movement of said second valve opener (O2) also to said valve (V1) which is normally actuable by means of said first valve opener (O1).

14. The yarn feeding device according to claim 13, **characterized in** that on said extension arm (2) an annular brake body (8) which cooperates with said storage body (6) is adjustable relative to said storage body (6) between a brake position and a gap position by means of a pneumatic piston-cylinder unit which is arranged in said extension arm (2), and that said piston-cylinder unit (Z) can be pressurized in parallel with said at least one second threading nozzle (D2) and, upon pressurization of all of said threading valves (D1, D2), by means of said second valve opener (O2) via said valve means (V).

15. The yarn feeding device according to claim 13, **characterized in** that said valve means (V) comprises a plastic housing (G) which is inserted with exposed first and second valve openers (O1, O2), approximately flush with the rear side of said motor housing (1), into a cutout (11) of said motor housing (1).

16. The yarn feeding device according to claim 15, **characterized in** that a compressed-air connection which is connected by an elastic connection tube to a supply connection (P) of said housing (G) of said valve means (V) is arranged in said motor housing (1) on the outside.

17. The yam feeding device according to at least one of claims 13 to 16, **characterized in** that locking tongues (20) which grip behind locking noses (20') in the cutout (11) of said motor housing (1) and which removably hold said valve means (V) are integrally formed onto the plastic housing (G) of said valve means.

## Revendications

1. Dispositif pneumatique à soupapes (V), particulièrement pour un système d'alimentation en fil (F), avec un carter (G) contenant une chambre (23) raccordable à une source de pression, avec au moins deux soupapes (V1, V2) entre la chambre (23) et des canaux d'écoulement (25, 12) vers plusieurs consommateurs (D1, D2, Z), avec des premiers et deuxièmes ouvre-soupapes (O1, O2) respectivement commandables manuellement et avec des liaisons d'actionnement (B1, B2) entre chaque ouvre-soupape et la - au moins une - soupape qui lui est appropriée, dans lequel une liaison de la chambre avec au moins un consommateur (D1) est réalisable avec le premier ouvre-soupape (O1), tandis que des liaisons de la chambre avec tous les consommateurs (D1, D2, Z) sont réalisables avec le deuxième ouvre-soupape (O2), caractérisé en ce que des canaux d'écoulement (12, 25) mutuellement séparés sont prévus de la chambre (23) vers le - au moins un - consommateur (D1) et vers les consommateurs restants (D2, Z), en ce qu'un accouplement d'entraînement (K) à effet unilatéral est prévu entre le deuxième ouvre-soupape (O2) et la soupape (V1) manoeuvrable individuellement au moyen du premier ouvre-soupape (O1), avec lequel le mouvement d'actionnement du deuxième ouvre-soupape (O2) est également transférable sur la soupape (V1) manoeuvrable en soi au moyen du premier ouvre-soupape (O1).

2. Dispositif à soupapes selon la revendication 1, caractérisé en ce que l'accouplement d'entraînement (K) est prévu entre les deux ouvre-soupapes (O1, O2).

3. Dispositif à soupapes selon la revendication 1, caractérisé en ce que l'accouplement d'entraînement (K) est prévu entre les deux liaisons d'actionnement (B2, B1).

4. Dispositif à soupapes selon la revendication 1, caractérisé en ce que l'accouplement d'entraînement est prévu entre la liaison d'actionnement (B1) du premier ouvre-soupape (O1) et le deuxième ouvre-soupape (O2).

5. Dispositif à soupapes selon la revendication 2, caractérisé en ce que les deux ouvre-soupapes (O1, O2) se recouvrent à engagement positif transversalement à leur direction d'actionnement de telle manière que soit le premier ouvre-soupape (O1) s'engage sous le deuxième ouvre-soupape (O2) soit le deuxième ouvre-soupape (O2) s'engage au-dessus du premier ouvre-soupape (O1).

6. Dispositif à soupapes selon la revendication 2, caractérisé en ce que l'un des deux ouvre-soupapes (O1, O2) présente un entraîneur (M) et en ce que soit l'entraîneur (M) est solidaire avec le premier ouvre-soupape (O1) et s'engage sous le deuxième ouvre-soupape (O2) soit l'entraîneur est solidaire avec le deuxième ouvre-soupape (O2) et s'engage au-dessus du premier ouvre-soupape (O1).

7. Dispositif à soupapes selon au moins l'une des revendications 1 à 6, caractérisé en ce que les premiers et deuxièmes ouvre-soupapes (O1, O2) sont des clés basculantes ou des boutons-poussoirs disposés l'un à côté de l'autre avec des directions d'actionnement à peu près parallèles.

8. Dispositif à soupapes selon au moins l'une des revendications 1 à 7, caractérisé en ce que le carter (G) est formé en deux parties (G1, G2), en ce que l'une des parties de carter (G1) présente la chambre (23), un raccord d'alimentation (P) vers la chambre, le premier canal d'écoulement (12) menant de la chambre (23) vers un raccord (13) fixé à la partie du carter vers les consommateurs restants (D2, Z), le deuxième canal d'écoulement (25) menant de la chambre (23) vers une face latérale de la partie du carter (G1) vers le - au moins un - consommateur (D1) et un premier élément de tuyère (26) étant formé dans une pièce transversale, et en ce que la deuxième partie de carter (G2) présente des guides (22) pour des poussoirs de soupape (21) formant les liaisons d'actionnement (B1, B2), les premiers et deuxièmes ouvre-soupapes (O1, O2) et une pièce transversale limitant, avec la pièce transversale de l'une des parties de carter (G1), un prolongement (18) du deuxième canal d'écoulement (25), dans laquelle un deuxième élément de tuyère (28) est formé qui représente ensemble avec le premier élément de tuyère (26) une tuyère d'éjection chargeable par le deuxième canal d'écoulement.

9. Dispositif à soupapes selon la revendication 8, caractérisé en ce que les parties de carter (G1, G2) sont des pièces en matière plastique moulées par injection.

10. Dispositif à soupapes selon au moins l'une des revendication 8 et 9, caractérisé en ce que les deux ouvre-soupapes (O1, O2) sont fixés avec l'entraîneur (M) à l'autre partie de carter (G2).

11. Dispositif à soupapes selon au moins l'une des revendications 8 et 9, caractérisé en ce que les deux ouvre-soupapes (O1, O2), avec l'entraîneur (M) solidaire à un ouvre-soupape (O1, O2), sont formés en une pièce avec l'autre partie de carter (G2) et affleurent à peu près avec sa pièce transversale.

12. Dispositif à soupapes selon au moins l'une des revendications 1 à 11, caractérisé en ce que les deux ouvre-soupapes (O1, O2) présentent des structures de surface (29a, 29b) clairement différentes l'une de l'autre au toucher.

13. Système d'alimentation en fil (F) avec un carter de moteur (1), dans lequel un arbre creux (3) entraînable à rotation portant un élément de bobinage est logé, avec un corps de réservoir (6) logé à rotation sur l'arbre creux, avec un bras (2) se prolongeant le long du corps de réservoir (6), avec au moins deux tuyères d'enfilement de fil (D1, D2) dont au moins une première est disposée devant l'extrémité du côté d'arrivée du fil de l'arbre creux (3) et au moins une deuxième est disposée au niveau du bras (2), et avec un dispositif à soupapes (V) pneumatique chargeable par une source de pression pour le chargement au choix de la - au moins - première tuyère d'enfilement (D1) ou de toutes les tuyères d'enfilement (D1, D2), dans lequel le dispositif à soupapes (V) pneumatique présente un carter (G) et un des premiers et deuxièmes ouvre-soupapes (O1, O2) manoeuvrables manuellement via des liaisons d'actionnement (B1, B2) pour l'ouverture de soupapes (V1, V2), caractérisé en ce que des canaux d'écoulement (12, 25) séparés l'un de l'autre sont prévus dans le carter (G) du dispositif à soupapes (V) vers la - au moins une - première tuyère d'enfilement (D1) et vers la - au moins une - deuxième tuyère d'enfilement (D2), et en ce qu'un accouplement d'entraînement (K) à effet unilatéral est prévu entre le deuxième ouvre-soupapes (O2) et la soupape (V1) manoeuvrable au moyen du premier ouvre-soupape (O1), avec laquelle le mouvement d'actionnement du deuxième ouvre-soupape (O2) peut être également transféré sur la soupape (V1) manoeuvrable en soi au moyen du premier ouvre-soupape (O1).

14. Système d'alimentation en fil selon la revendication 13, caractérisé en ce qu'au niveau du bras (2), un corps de freinage (7) annulaire, coopérant avec le corps de réservoir (6), est réglable relativement au corps de réservoir (6) entre une position de freinage et une position d'ouverture au moyen d'une unité piston-cylindre (Z) pneumatique disposée au niveau du bras (2), et en ce que l'unité piston-cylindre (Z) peut être mise sous pression via le dispositif à soupapes (V) parallèlement à la - au moins une - deuxième tuyère d'enfilement (D2) et lors de la mise sous pression de toutes les tuyères d'enfilement (D1, D2) au moyen du deuxième ouvre-soupape (O2).

15. Système d'alimentation en fil selon la revendication 13, caractérisé en ce que le dispositif à soupapes (V) présente un carter en matière plastique (G) qui, lorsque les premiers et deuxièmes ouvre-soupapes (O1, O2) sont exposés, est mis en oeuvre à peu près à niveau avec le côté arrière du carter de moteur (1) dans une découpe (11) du carter de moteur (1).

16. Système d'alimentation en fil selon la revendication 15, caractérisé en ce qu'un raccord d'air comprimé, qui est relié par un tuyau de liaison élastique avec un raccord d'alimentation (P) du carter (G) du dispositif à soupapes (V), est disposé à l'extérieur dans le carter de moteur (1).

17. Système d'alimentation en fil selon au moins l'une des revendications 13 à 16, caractérisé en ce qu'au carter en matière plastique (G) du dispositif à soupapes (V), des languettes d'arrêt (20) sont formées en une seule pièce, qui prennent derrière des taquets d'arrêt (20') dans la découpe (11) du carter de moteur (1) et qui veillent à garder le dispositif à soupapes (V) amovible.
